# EUROPÄISCHE PATENTANMELDUNG

(11) **EP 3 176 512 A1**
(43) Veröffentlichungstag der Anmeldung: **07.06.2017**
(21) Anmeldenummer: 16201846.9
(22) Anmeldetag: 02.12.2016
(51) Int. Cl.: F24D 12/02, F24D 19/10

(54) **HEIZUNGSANLAGE MIT EINER BRENNWERTHEIZUNG**

(30) Priorität: 05.12.2015 DE 102015015790
(71) Anmelder: Jaske, Wolfgang, 49811 Lingen (DE); Wolf, Peter, 26209 Hatten (DE)
(72) Erfinder: Jaske, Wolfgang, 49811 Lingen (DE); Wolf, Peter, 26209 Hatten (DE)
(74) Vertreter: Jabbusch, Matthias

(57) **Zusammenfassung**

Die Erfindung ist ein Verfahren und eine Vorrichtung einer hydraulischen Schaltung zur Effizienzsteigerung der Energienutzung von Brennwertheizungen. Brennwertheizungen zeichnen sich gegenüber den konventionellen Heizungsanlagen dadurch aus, dass zusätzlich zur Erwärmung eines primären Kessels die Wärme des Abgases bis in den Kondensationsbereich genutzt wird. Die vorliegende Erfindung erfüllt die Aufgabe die Wärmegewinnung, durch eine neue hydraulische Schaltung, noch effizienter zu machen, in dem immer der kälteste Bereich der Heizkreisläufe über den Abgaswärmeübertrager geführt wird.

Die der Erfindung zu Grunde liegende Aufgabe mit der größten Temperatursenke die Wärme aus dem Abgas zu gewinnen wird dadurch erreicht, dass der Wärmegewinnungskreislauf vom höher temperierten Heizkreislauf abgekoppelt und vom eigenständig parallel betriebenen niedrig temperierten Heizkreislauf gebildet wird.

## Beschreibung

Die Erfindung betrifft eine Heizungsanlage mit den Merkmalen des Oberbegriffs des Patentanspruchs 1 und ein Verfahren mit den Merkmalen des Oberbegriffs des Patentanspruchs 7. Außerdem ist die Erfindung ein Verfahren und eine Vorrichtung zur Verbesserung der Brennwerttechnik durch die hydraulische Entkopplung des Abgaswärmeübertragers vom so genannten primären Kessel - Kessel ist ein Fachbegriff für einen Wärmeübertrager, der direkt mit einer Verbrennung eines fossilen Energieträgers erwärmt wird - und die sich daraus ergebenden hydraulischen Schaltungen zur Effizienzsteigerung der Energienutzung. Die Brennwerttechnik zeichnet sich gegenüber der konventionellen Heizungstechnik dadurch aus, dass zusätzlich zur Erwärmung eines primären Kessels die Wärme des Abgases durch Nutzung eines eingebauten Abgaswärmeübertragers bis in den Kondensationsbereich genutzt wird. Als Brennwertbereich wird eine Abkühlung des Abgases bis in den Kondensationsbereich des bei der Verbrennung entstehenden Wassers bezeichnet.

Bei der Brennwerttechnik wird durch die Installation eines Abgaswärmeübertragers in den Abzug des Abgases zusätzlich der Nutzungsgrad der Energie des Brennstoffs dadurch erhöht, dass das Abgas noch weiter abgekühlt und die Kondensationswärme des bei der Verbrennung entstehenden Wasserdampfs genutzt wird. Der Abgaswärmeübertrager wird mit dem kühlen Rücklauf des Heizkreislaufs beschickt und wärmt den Heizkreislauf vor. Der Wirkungsgrad der Abgaswärmegewinnung und damit der Gesamtwirkungsgrad der Wärmegewinnung wird dabei von der Rücklauftemperatur des Heizkreislaufs bestimmt.

Die hydraulische Steuerung von Brennwertheizungen mit mindestens einem höher und einem niedrig temperierten Heizkreislauf ist im Allgemeinen derart hydraulisch geschaltet, dass beide Heizkreisläufe nach dem primären Kessel über eine Verteilung, das heißt von einem sich aufteilenden Zulauf versorgt werden und die Rückläufe beider Heizkreisläufe vor der Wiedererwärmung auch wieder zusammengeführt werden. Die Verteilung der Wärme und die dazu gehörigen hydraulischen Heizkreisläufe werden nach Bedarf konzipiert und sind nicht Gegenstand der Erfindung. Der in der Brennwerttechnik eingebaute Abgaswärmeübertrager wird mit dem aus den Heizkreisläufen zusammengeführten Rücklauf gekühlt.
Die Temperatur des kühleren Heizkreislaufs wird in einem so genannten Sekundärkreislauf, in dem sich die Verbraucher befinden, durch Vermischung eines Teils des Rücklaufs dieses Heizkreises mit dem heißen Zulauf aus dem primären Kessel reguliert. Die dort verwendeten Schaltungsvarianten sind nicht Gegenstand der zu erfüllenden Aufgabe der vorliegenden Erfindung und werden daher nicht näher ausgeführt. Aus der DE 10 2013 005 691 A1 ist eine gattungsgemäße Heizungsanlagen bekannt, die eine Brennwertheizung mit einem primären Kessel und einer Abgaswärmeübertragung aufweist und mit der ein niedrig temperierter Heizkreislauf und ein höher temperierter Heizkreislauf betrieben werden. Eine optimale Energieausnutzung erfolgt bei der hier beschriebenen Heizungsanlage nicht.

In der DE 10 2007 063 137 A1 wird eine bessere Energienutzung mit herkömmlichen hydraulischen Schaltungen und einem erheblichen Mess- und Regelaufwand mit mehreren Versorgungsanlagen und Heizkreisläufen angestrebt.

In der DE 20 2013 010 117 U1 und der DE 20 2007 011 120 U1 werden weitere Varianten beschrieben. Dort soll der Wirkungsgrad der Wärmegewinnung in unterschiedlichen hydraulischen Schaltungsvarianten durch Installation von Wärmepumpen als Verbraucher erhöht werden.

Der Erfindung liegt die Aufgabe zu Grunde, den Wirkungsgrad der eingangs genannten Heizungsanlage zu verbessern.

Dies erfolgt mit einer Heizungsanlage mit den Merkmalen des Patentanspruchs 1 und mit einem Verfahren mit den Merkmalen des Patentanspruchs 7. Vorteilhafte Ausgestaltungen der Erfindung sind in den Unteransprüchen beschrieben.

Bei einer Heizungsanlage mit einer Brennwertheizung mit einem primären Kessel und einem Abgaswärmeübertrager und einem niedrig temperierten Heizkreislauf und einem höher temperierten Heizkreislauf wird die Aufgabe erfindungsgemäß dadurch gelöst, dass die Heizkreisläufe parallel betrieben werden, so dass keine Durchmischung eines Rücklaufs des niedrig temperierten Heizkreislaufs mit einem Rücklauf des höher temperierten Heizkreislaufs erfolgt und dass der Abgaswärmeübertrager der Brennwertheizung immer mit der niedrigsten in der Heizungsanlage befindlichen Rücklauftemperatur beschickt und die größte mögliche Temperaturdifferenz zwischen der Rücklauftemperatur des Rücklaufs des niedrig temperierten Heizkreislaufs und der Abgastemperatur erreicht wird. Man kann hier auch von einer Vorrichtung zur Effizienzsteigerung der Wärmegewinnung aus dem Abgas von Brennwertheizungen mit mindestens zwei unterschiedlich temperierten Heizkreisläufen sprechen.

Grundsätzlich wird die Aufgabe auch dadurch gelöst, dass ein Brennwertkessel mit mindestens zwei unterschiedlich temperierten Verbraucherkreisläufen betrieben wird. Der niedrig temperierte Verbraucherkreislauf wird mit der Energie aus dem Abgaswärmeübertrager und der höher temperierte Verbraucherkreislauf mit der Energie aus dem primären Kessel betrieben. Der Rücklauf des niedrig temperierten Verbraucherkreislaufs, der zur Wärmegewinnung aus dem Abgas genutzt wird, ist immer der kälteste Bereich der gesamten Wärmegewinnungsanlage. Die vorliegende Erfindung verbindet die Aufgabe der maximalen Wärmegewinnung bei dynamisch flexibler Last einer Heizungsanlage mit mindestens einem wärmeren und einem kälteren Heizkreislauf oder einem Verbraucher, der die Aufgabe eines Heizkreislaufs übernimmt, durch eine neue parallele Kombination der Heizkreisläufe dadurch, dass immer der kälteste Rücklauf zur Abgaswärmegewinnung im Brennwertbereich eingesetzt wird.

Mit der Erfindung wird die technisch und praktisch größtmögliche Temperaturdifferenz genutzt, so dass eine maximale Wärmegewinnung aus dem Abgas erfolgt. Die Wärmegewinnung erfolgt mit dem eigenständig parallel betriebenen niedrig temperierten Heizkreislauf der vom höher temperierten Heizkreislauf abgekoppelt ist.

Wenn z. B. eine Heizungsanlage nur einen Heizkreislauf besitzt, wird der Betrieb eines kühleren Heizkreislaufs im oben genannten Sinne dadurch erreicht, dass als Verbraucher z. B. eine Wärmepumpe angeschlossen ist, die über den Wärmepumpenprozess die aufgenommene Wärme auf einem höheren Temperaturniveau auf den Heizkreislauf überträgt.

Da die Wärmegewinnung aus dem Abgas nur einen Energiebeitrag im Bereich von etwa 25 % der gesamten erzeugten Verbrennungswärme leisten kann und die Verbraucher entsprechend dimensioniert sind, sind die niedrig und die höher temperierten Heizkreisläufe noch indirekt über einen Wärmeübertrager oder auch direkt miteinander verbunden, so dass auch bei Extremwetterlagen eine ausreichende Versorgung des niedrig temperierten Heizkreislaufs mit Wärme garantiert werden kann.

In weiteren Ausführungen wird der niedrig temperierte Heizkreislauf mit weiteren Verbrauchern noch weiter abgekühlt. Zum Beispiel ließen sich noch Wärmepumpen oder Frischlufterwärmer usw. zuschalten. Die weitere Abkühlung des Rücklaufs des niedrig temperierten Heizkreislaufs steigert die Ausbeute der Wärmegewinnung aus dem Abgas noch weiter.

Die Erfindung betrifft weiterhin ein Verfahren zum Betrieb einer Heizungsanlage mit einer Brennwertheizung mit einem primären Kessel und einem Abgaswärmeübertrager und mit einem niedrig temperierten Heizkreislauf und einem höher temperierten Heizkreislauf, wobei erfindungsgemäß vorgesehen ist, dass die Heizkreisläufe parallel betrieben werden, so dass keine Durchmischung eines Rücklaufs des niedrig temperierten Heizkreislaufs mit einem Rücklauf des höher temperierten Heizkreislaufs erfolgt und dass der Abgaswärmeübertrager der Brennwertheizung immer mit der niedrigsten in der Heizungsanlage befindlichen Rücklauftemperatur beschickt und die größtmögliche Temperaturdifferenz zwischen der Rücklauftemperatur der Rücklaufleitung des niedrig temperierten Heizkreislaufs und der Abgastemperatur erreicht wird.

Nachfolgend wird die Erfindung anhand eines in der Zeichnung dargestellten Ausführungsbeispiels weiter erläutert. Im Einzelnen zeigen die schematischen Darstellung in:
- Figur 1 a - c:: Eine Darstellung von bekannten Brennwertheizkesseln nach dem Stand der Technik;
- Figur 2:: Einen prinzipiellen Aufbau der erfindungsgemäßen Heizungsanlage;
- Figur 3:: Den Aufbau einer erfindungsgemäßen Heizungsanlage mit einem Brennwertkessel und zwei Heizkreisläufen;
- Figur 4:: Eine Variante einer erfindungsgemäßen Heizungsanlage mit einer Verbindungsleitung;
- Figur 5:: Eine weitere Variante einer erfindungsgemäßen Heizungsanlage mit einer Wärmepumpe;
- Figur 6:: Eine weitere Variante einer erfindungsgemäßen Heizungsanlage zur Warmwasserbereitung; und
- Figur 7:: Eine weitere Variante der erfindungsgemäßen Heizungsanlage mit einer Lufterwärmung.

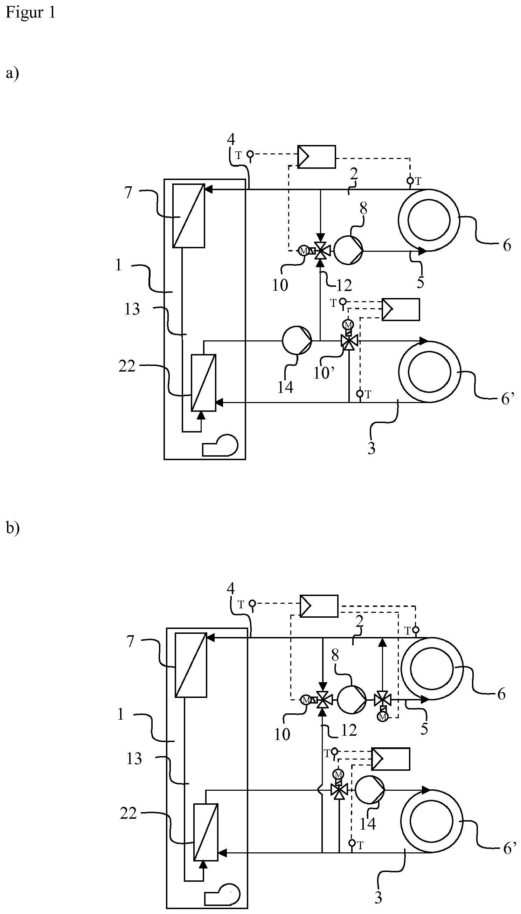

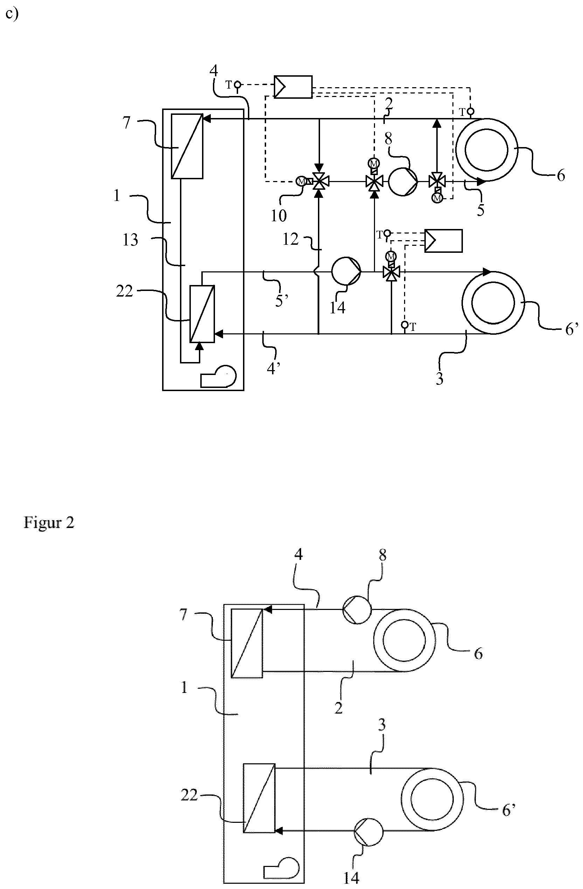

Bekannt aus der Buderus Planungsunterlage Ausgabe 1/2001 (A4.03.01) S. 10-11 sind Brennwertheizkessel mit zwei Rücklaufstutzen für zwei unterschiedlich temperierte Rücklaufströme. Der kältere Rücklaufstrom kühlt den Abgasstrom und vermischt sich dann intern mit dem Rücklaufstrom des höher temperierten Heizkreislaufs, um dann von der Feuerung weiter erwärmt zu werden. Dieser Brennwertkessel mit dem Abgaswärmeübertrager kann mit drei Varianten hydraulischer Schaltungen beschickt werden, wie in Figur 1 a-c dargestellt. Zum einen wird der niedrig temperierte Heizkreislauf vom Vorlauf zum anderen vom Rücklauf des höher temperierten Heizkreislaufs beschickt. Der Zulauf erwärmten Wassers auf den niedrig temperierten Heizkreislauf wird über den Wärmebedarf dieses Heizkreislaufs bestimmt. Das heißt, dass eine Wärmegewinnung aus dem Abgas nur bei einer Wärmeanforderung des kälteren Heizkreislaufs stattfinden kann und ist daher einem größeren Schwankungsbereich ausgesetzt. Diese Schaltungen funktionieren befriedigend nur bei einer ausreichenden Wärmeanforderung des niedrig temperierten Heizkreislaufs. Bei fehlendem Wärmebedarf des niedrig temperierten Heizkreislaufs findet keine optimale Wärmegewinnung unter Beteiligung des niedrig temperierten Heizkreislaufs statt. Lediglich bei den Varianten wie in Figur 1b) und 1c) dargestellt, ist eine teilweise Wärmegewinnung mit dem Rücklauf des höher temperierten Heizkreislaufs ohne Wärmeanforderung des niedrig temperierten Heizkreislaufs aus dem Abgas möglich. In dem Fall muss eine Bypassleitung vom Rücklauf des höher temperierten Heizkreislaufs freigeschaltet werden.

In Figur 2 ist der prinzipielle Aufbau der erfindungsgemäßen hydraulischen Schaltung einer Heizungsanlage mit einem Brennwertkessel 1 und zwei Heizkreisläufen oder allgemeiner Verbraucherkreisläufen 2 und 3 dargestellt. Der niedrig temperierte Heizkreislauf 2 besteht aus mindestens einer Zu- und Ablaufleitung 5 und 4 und einer Wärmeenergieübergabeeinrichtung 6 und ist mit dem Abgaswärmeübertrager 7 des Brennwertkessels 1 verbunden. Das Heizmedium wird mit einer Heizkreislaufpumpe 8 im Kreis gepumpt. Der höher temperierte Heizkreislauf oder auch Primärheizkreislauf 3 ist in dieser prinzipiellen Darstellung genauso aufgebaut und mit dem primären Kessel 22 verbunden. Durch die hydraulische Trennung der beiden Heizkreisläufe oder allgemeiner Verbraucherkreisläufe 2 und 3 erfolgt keine Vermischung beider Rückläufe, so dass auch keine gegenüber dem Rücklauf des niedrig temperierten Verbraucherkreislaufs 2 höhere Mischtemperatur im Rücklauf entstehen kann, die die Wärmegewinnungsquote des Abgaswärmeübertragers negativ beeinflusst.

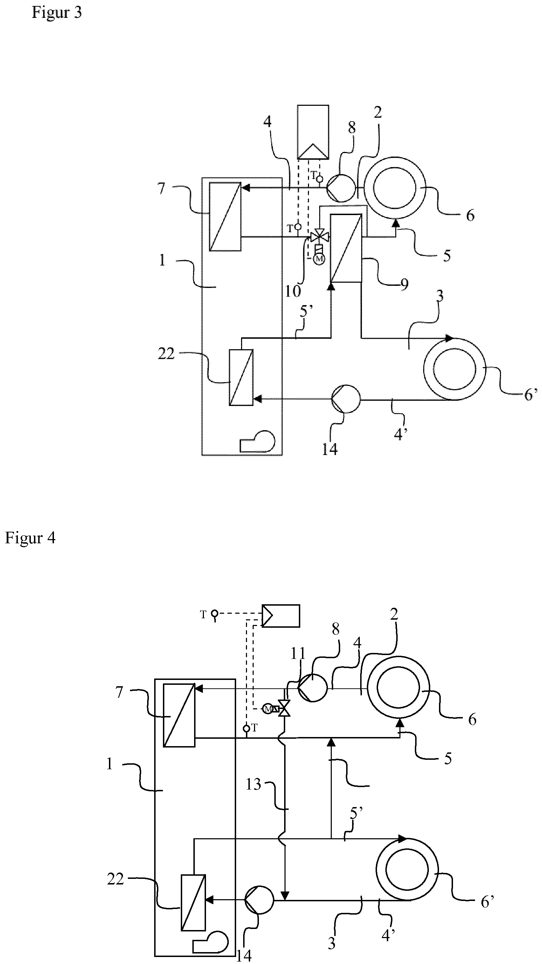

In Figur 3 ist der Aufbau einer Heizungsanlage mit einem Brennwertkessel 1 und zwei Heizkreisläufen 2 und 3 dargestellt. In dieser Darstellung sind die Zulaufleitungen 5, 5' beider Heizkreisläufe über einen Wärmeübertrager 9 wärmeleitend miteinander verbunden. Der höher temperierte Heizkreislauf 3 arbeitet als zuschaltbare Wärmequelle für den niedrig temperierten Heizkreislauf 2, wenn dort ein erhöhter Wärmebedarf besteht. Der höher temperierte Heizkreislauf 3 wird als Wärmequelle über den Wärmeübertrager 9 temperaturgesteuert bei Bedarf zugeschaltet. Dies kann z. B. über ein Mischventil 10 erfolgen. Für die Temperaturregelung können die in der Heizungstechnik üblichen und für die Aufgabe geeigneten Geräte verwendet werden. Die indirekte Wärmeübertragung findet insbesondere bei Heizungsanlagen Anwendung, die geschlossene niedrig temperierte Heizkreisläufe 2 verlangen. Modernere Anlagen bzw. Neuanlagen benötigen keine vom primären Kessel 22 getrennte, geschlossene Kreislaufführung, da bei ihnen keine Sauerstoffdiffusion durch die verwendeten Kunststoffleitungen stattfindet. Die erfindungsgemäße Forderung, dass keine Mischtemperatur durch Vermischung zweier Rückläufe stattfindet und dass der Abgaswärmetauscher die niedrigste im System befindliche Temperatur zur Verfügung gestellt bekommt, ist auch hier erfüllt.

In Figur 4 wird eine direkte Verbindung über die Zu- und Rückläufe 5, 5'und 4, 4' einer Verbindungsleitung 12, 13 zwischen dem höher temperierten Heizkreislauf 3 und dem niedrig temperierten Heizkreislauf 2 hergestellt. Die Verbindungsleitungen 12, 13 sind bevorzugt derart zu verlegen, dass die Verbindungsleitung 13 als Rücklauf auf der Druckseite der Heizkreislaufpumpe 8 der im Rücklauf 4 des niedrig temperierten Heizkreislaufs 2 und der Saugseite der Heizkreislaufpumpe 14 des höher temperierten Heizkreislaufs 3 liegt und der Zulauf der Verbindungsleitung 12 in den Zulauf 5 des niedrig temperierten Heizkreislaufs 2 vor der Wärmeübergabeeinrichtung 6 mündet. Die Zuführung des höher temperierten Heizmediums in dem niedrig temperierten Heizkreislauf 2 wird beispielhaft über ein temperaturgesteuertes Durchgangsventil 11 geregelt. Die Art der Regelung ist den Aufgaben anzupassen.

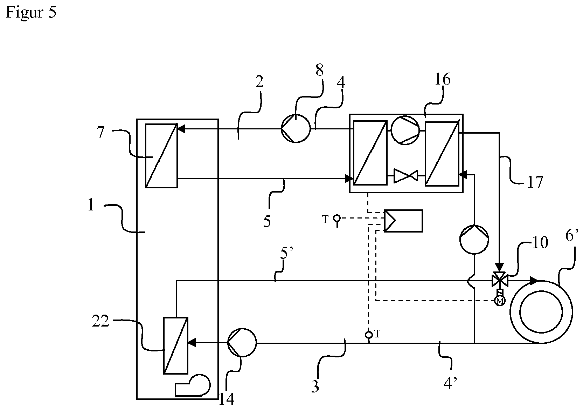

In Figur 5 ist eine Heizungsanlage mit einem Brennwertkessel 1 mit einem höher temperierten Heizkreislauf 3 und einem niedrig temperierten Heizkreislauf 2, dessen Wärmeverbraucher eine Wärmepumpe 16 ist, abgebildet. Die Wärmepumpe 16 transferiert die aus dem Abgas gewonnene niedrig temperierte Wärme über einen Wärmepumpenprozess auf die gewünschte Vorlauftemperatur des Heizkreislaufs 3 und wird dann über eine Verbindungsleitung 17 von der Wärmepumpe auf den Zulaufl5' des höher temperierten Heizkreislaufs 3 übertragen.

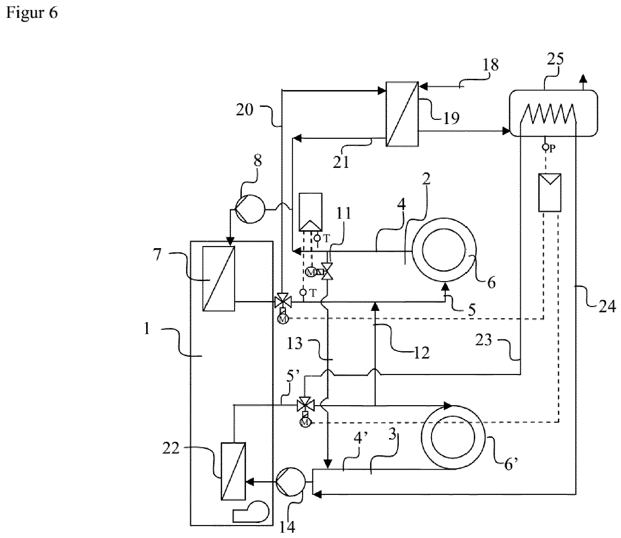

In Figur 6 ist zu den beiden Heizkreisläufen 2, 3 noch ein Warmwasserbereiter eingefügt. Der Warmwasserbereiter verfügt über einen Wärmeübertrager 19 zur Vorwärmung des kalten zulaufenden Leitungswassers 18, der über eine Zu- und Rücklaufleitung 20, 21 vom niedrig temperierten Heizkreis 2 mit dem der Abgaswärmeübertrager 7 verbunden ist. Der Warmwasserspeicher 25 wird vom primären Kessel 22 über die Zu- und Rücklaufleitungen 23, 24 mit Wärme versorgt. Die Steuerung der Mischer erfolgt klassisch über einen Drucksensor oder einen Strömungswächter.

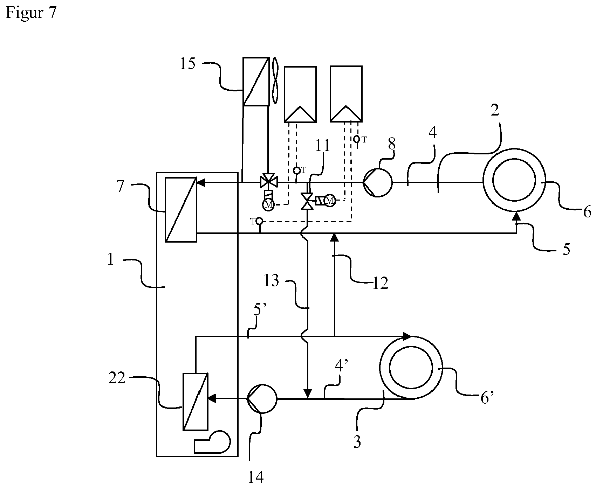

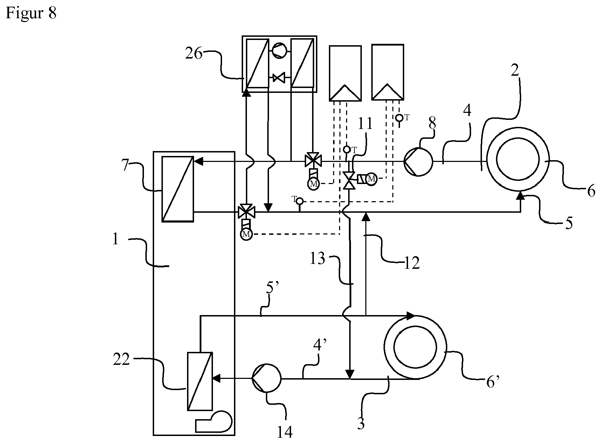

In Figur 7 ist die Einbindung einer Lufterwärmung 15 zur Steigerung der Wärmegewinnungsrate aus dem Abgas beispielhaft dargestellt. Der Ort der Abzweigung zur Lufterwärmung 15 ist nach der Verbindungsleitung Rücklauf 13 zum höher temperierten Heizkreislauf 3 zu wählen, damit keine Verluste im Heizungssystem entstehen. In Figur 8 ist eine Wärmepumpe 16 anstelle der Lufterwärmung installiert. Die der Rücklaufleitung 4 entzogene Wärme kann z.B. wieder der Zulaufleitung 5 zugeführt werden.

Auf die Darstellung sicherheitsrelevanter Vorrichtungen in Heizkreisläufen wie z.B. Überdruckventilen usw., die nicht erfindungsrelevant sind, wurde zur Wahrung einer guten Übersicht, verzichtet.

Vorrichtung zur Effizienzsteigerung der Wärmegewinnung aus dem Abgas von Brennwertheizungen 1 dadurch gekennzeichnet, dass durch Ausbildung eines niedrig temperierten Heizkreislaufs 2 und eines höher temperierten Heizkreislaufs 3 die parallel betrieben werden, der Abgaswärmeübertrager der Brennwertheizung 1 immer mit der niedrigsten in der Heizungsanlage befindlichen Rücklauftemperatur beschickt und die größte mögliche Temperaturdifferenz zwischen der Rücklauftemperatur der Rücklaufleitung 4 des niedrig temperierten Heizkreislaufs 2 und der Abgastemperatur erreicht wird.

Vorrichtung zur Effizienzsteigerung der Wärmegewinnung aus dem Abgas von Brennwertheizungen 1 mit mindestens zwei unterschiedlich temperierten Heizkreisläufen 2 und 3 nach Anspruch 1 dadurch gekennzeichnet, dass die beiden Heizkreisläufe 2 und 3 bei einem erhöhten Wärmebedarf des niedrig temperierten Heizkreislaufs 2 temperaturgesteuert, wärmeleitend über einen Wärmeübertrager 9 miteinander verbunden sind, so dass am Abgaswärmeübertrager 7 immer die niedrigste Temperatur der gesamten Heizungsanlage zur Abgaskühlung genutzt wird.

Vorrichtung zur Effizienzsteigerung der Wärmegewinnung aus dem Abgas von Brennwertheizungen 1 mit mindestens zwei unterschiedlich temperierten Heizkreisläufen 2 und 3 nach Anspruch 1 dadurch gekennzeichnet, dass die beiden Heizkreisläufe 2 und 3 bei einem erhöhten Wärmebedarf des niedrig temperierten Heizkreislaufs 2 über ein temperaturgesteuertes Durchgangsventil 11 verbunden sind, so dass am Abgaswärmeübertrager 7 immer die niedrigste Temperatur der Heizungsanlage zur Abgaskühlung genutzt wird.

Vorrichtung zur Effizienzsteigerung der Wärmegewinnung aus dem Abgas von Brennwertheizungen 1 mit mindestens zwei unterschiedlich temperierten

Heizkreisläufen 2 und 3 nach Anspruch 1 dadurch gekennzeichnet, dass der niedrig temperierte Heizkreislauf 2 eine Wärmepumpe 16 als Verbraucher besitzt und die über den Wärmpumpenprozess auf ein höheres Temperaturniveau gebrachte Wärme an den höher temperierten Heizkreislauf 3 abgibt, so dass am Abgaswärmeübertrager 7 immer die niedrigste Temperatur der Heizungsanlage zur Abgaskühlung genutzt wird.

Vorrichtung zur Effizienzsteigerung der Wärmegewinnung aus dem Abgas von Brennwertheizungen 1 mit mindestens zwei unterschiedlich temperierten Heizkreisläufen 2 und 3 nach Anspruch 1 dadurch gekennzeichnet, dass parallel zu dem niedrig temperierten Heizkreislauf 4 und dem höher temperierten Heizkreislauf 3 noch eine Warmwasserbereitung installiert ist und mit der Abgaswärme die Vorwärmung des Zulaufs 18 von Frischwasser mit einem Wärmeübertrager erfolgt, so dass am Abgaswärmeübertrager 7 immer die niedrigste Temperatur der Heizungsanlage zur Abgaskühlung genutzt wird.

Vorrichtung zur Effizienzsteigerung der Wärmegewinnung aus dem Abgas von Brennwertheizungen 1 mit mindestens zwei unterschiedlich temperierten Heizkreisläufen 2 und 3 nach Anspruch 1 dadurch gekennzeichnet, dass die aus dem Abgas der Brennwertheizung 1 gewonnene Wärme immer an einen Verbraucher weiter geleitet wird.

Verfahren zur Effizienzsteigerung der Wärmegewinnung aus dem Abgas von Brennwertheizungen 1 dadurch gekennzeichnet, dass durch Ausbildung eines niedrig temperierten Heizkreislaufs 2 und eines höher temperierten Heizkreislaufs 3 die parallel betrieben werden, der Abgaswärmeübertrager 7 der Brennwertheizung 1 immer mit der niedrigsten in der Heizungsanlage befindlichen Rücklauftemperatur beschickt und die größte mögliche Temperaturdifferenz zwischen der Rücklauftemperatur der Rücklaufleitung 4 des niedrig temperierten Heizkreislaufs 2 und der Abgastemperatur erreicht wird.

Verfahren zur Effizienzsteigerung der Wärmegewinnung aus dem Abgas von Brennwertheizungen 1 mit mindestens zwei unterschiedlich temperierten Heizkreisläufen 2 und 3 nach Anspruch 7 dadurch gekennzeichnet, dass die beiden Heizkreisläufe 2 und 3 nur bei einem erhöhten Wärmebedarf des niedrig temperierten Heizkreislaufs 2 temperaturgesteuert wärmeleitend über einen Wärmeübertrager 9 miteinander verbunden sind, so dass am Abgaswärmeübertrager 7 immer die niedrigste Temperatur der gesamten Heizungsanlage zur Abgaskühlung genutzt wird.

Verfahren zur Effizienzsteigerung der Wärmegewinnung aus dem Abgas von Brennwertheizungen 1 mit mindestens zwei unterschiedlich temperierten Heizkreisläufen 2 und 3 nach Anspruch 7 dadurch gekennzeichnet, dass die beiden Heizkreisläufe 2 und 3 nur bei einem erhöhten Wärmebedarf des niedrig temperierten Heizkreislaufs 2 über ein Temperatur gesteuertes Durchgangsventil 11 verbunden sind, so dass am Abgaswärmeübertrager 7 immer die niedrigste Temperatur der Heizungsanlage zur Abgaskühlung genutzt wird.

Verfahren zur Effizienzsteigerung der Wärmegewinnung aus dem Abgas von Brennwertheizungen 1 mit mindestens zwei unterschiedlich temperierten Heizkreisläufen 2 und 3 nach Anspruch 7 dadurch gekennzeichnet, dass die aus dem Abgas der Brennwertheizung 1 kommende Wärme immer an einen Verbraucher weiter geleitet wird.

### Bezugszahlenliste:

- (1): Brennwertheizung
- (2): niedrig temperierter Heizkreislauf
- (3): höher temperierter Heizkreislauf
- (4): Rücklauf des niedrig temperierten Heizkreislaufs
- (4'): Rücklauf des höher temperierten Heizkreislaufs
- (5): Zulauf des niedrig temperierten Heizkreislaufs
- (5'): Zulauf des höher temperierten Heizkreislaufs
- (6) (6'): Wärmeenergieübergabeeinrichtung
- (7): Abgaswärmeübertrager
- (8): Heizkreislaufpumpe
- (9): Wärmeübertrager
- (10) (10'): Mischventil
- (11): Durchgangsventil
- (12): Verbindungsleitung Zulauf
- (13): Verbindungsleitung Rücklauf
- (14): Heizkreislaufpumpe
- (15): Lufterwärmung
- (16): Wärmepumpe
- (17): Zulaufleitung Warmwasser aus Wärmepumpe
- (18): zulaufendes Leitungswasser
- (19): Wärmeübertrager
- (20): Verbindungsleitung Wärmeübertrager Frischwasservorwärmung
- (21): Rücklaufleitung Wärmeübertrager Frischwasservorwärmung
- (22): primärer Kessel
- (23): Zulaufleitung Warmwasserbereiter
- (24): Rücklaufleitung Warmwasserbereiter
- (25): Warmwasserbereiter
- (26): Wärmepumpe

## Patentansprüche

1. Heizungsanlage mit einer Brennwertheizung (1) mit einem primären Kessel (22) und einem Abgaswärmeübertrager (7) und mit einem niedrig temperierten Heizkreislauf (2) und einem höher temperierten Heizkreislauf (2),
**dadurch gekennzeichnet,**
**dass** die Heizkreisläufe (2, 3) parallel angeschlossen sind, so dass keine Durchmischung eines Rücklaufs (4) des niedrig temperierten Heizkreislaufs (2) mit einem Rücklauf (4') des höher temperierten Heizkreislaufs (3) erfolgt und
**dass** der Abgaswärmeübertrager (7) der Brennwertheizung (1) immer mit der niedrigsten in der Heizungsanlage befindlichen Rücklauftemperatur beschickt und die größte mögliche Temperaturdifferenz zwischen der Rücklauftemperatur des Rücklaufs (4) des niedrig temperierten Heizkreislaufs (2) und der Abgastemperatur erreicht wird.

2. Heizungsanlage nach Anspruch 1, **dadurch gekennzeichnet, dass** die beiden Heizkreisläufe (2 und 3) bei einem erhöhten Wärmebedarf des niedrig temperierten Heizkreislaufs (2) temperaturgesteuert, wärmeleitend über einen Wärmeübertrager (9) miteinander verbunden sind, so dass am Abgaswärmeübertrager (7) immer die niedrigste Temperatur der gesamten Heizungsanlage zur Abgaskühlung genutzt wird.

3. Heizungsanlage nach Anspruch 1 oder 2, **dadurch gekennzeichnet, dass** die beiden Heizkreisläufe (2 und 3) bei einem erhöhten Wärmebedarf des niedrig temperierten Heizkreislaufs (2) über ein Temperatur gesteuertes Durchgangsventil (11) verbunden sind, so dass am Abgaswärmeübertrager (7) immer die niedrigste Temperatur der Heizungsanlage zur Abgaskühlung genutzt wird.

4. Heizungsanlage nach einem der vorhergehenden Ansprüche, **dadurch gekennzeichnet, dass** der niedrig temperierte Heizkreislauf (2) eine Wärmepumpe (16) als Verbraucher besitzt und die über den Wärmpumpenprozess auf ein höheres Temperaturniveau gebrachte Wärme an den höher temperierten Heizkreislauf (3) abgibt, so dass am Abgaswärmeübertrager (7) immer die niedrigste Temperatur der Heizungsanlage zur Abgaskühlung genutzt wird.

5. Heizungsanlage nach einem der vorhergehenden Ansprüche, **dadurch gekennzeichnet, dass** parallel zu dem niedrig temperierte Heizkreislauf (4) und dem höher temperierten Heizkreislauf (3) noch eine Warmwasserbereitung installiert ist und mit der Abgaswärme die Vorwärmung des Zulaufs (18) von Frischwasser mit einem Wärmeübertrager erfolgt, so dass am Abgaswärmeübertrager (7) immer die niedrigste Temperatur der Heizungsanlage zur Abgaskühlung genutzt wird.

6. Heizungsanlage nach einem der vorhergehenden Ansprüche, **dadurch gekennzeichnet, dass** die aus dem Abgas der Brennwertheizung (1) gewonnene Wärme immer an einen Verbraucher weiter geleitet wird.

7. Verfahren zum Betrieb einer Heizungsanlage mit einer Brennwertheizung (1) mit einem primären Kessel und einem Abgaswärmeübertrager (7) und einem niedrig temperierten Heizkreislauf (2) und einem höher temperierten Heizkreislauf (3),
**dadurch gekennzeichnet,**
**dass** die Heizkreisläufe (2, 3) parallel betrieben werden, so dass keine Durchmischung eines Rücklaufs des niedrig temperierten Heizkreislaufs (2) mit einem Rücklauf des höher temperten Heizkreislaufs (3) erfolgt und
**dass** der Abgaswärmeübertrager (7) der Brennwertheizung (1) immer mit der niedrigsten in der Heizungsanlage befindlichen Rücklauftemperatur beschickt und die größte mögliche Temperaturdifferenz zwischen der Rücklauftemperatur der Rücklaufleitung (4) des niedrig temperierten Heizkreislaufs (2) und der Abgastemperatur erreicht wird.

8. Verfahren nach Anspruch 7, **dadurch gekennzeichnet, dass** die beiden Heizkreisläufe (2 und 3) nur bei einem erhöhten Wärmebedarf des niedrig temperierten Heizkreislaufs (2) temperaturgesteuert wärmeleitend über einen Wärmeübertrager (9) miteinander verbunden sind, so dass am Abgaswärmeübertrager (7) immer die niedrigste Temperatur der gesamten Heizungsanlage zur Abgaskühlung genutzt wird.

9. Verfahren nach Anspruch 7 oder 8, **dadurch gekennzeichnet, dass** die beiden Heizkreisläufe (2 und 3) nur bei einem erhöhten Wärmebedarf des niedrig temperierten Heizkreislaufs (2) über ein Temperatur gesteuertes Durchgangsventil (11) verbunden sind, so dass am Abgaswärmeübertrager (7) immer die niedrigste Temperatur der Heizungsanlage zur Abgaskühlung genutzt wird.

10. Verfahren nach einem der Ansprüche 7 bis 9, **dadurch gekennzeichnet, dass** die aus dem Abgas der Brennwertheizung (1) kommende Wärme immer an einen Verbraucher weiter geleitet wird.
